# EUROPÄISCHE PATENTSCHRIFT

(11) **EP 2 269 850 B1**
(45) Veröffentlichungstag und Bekanntmachung des Hinweises auf die Patenterteilung: **15.10.2014**
(21) Anmeldenummer: 10168001.5
(22) Anmeldetag: 30.06.2010
(51) Int. Cl.: B60H 3/00

(54) **Beduftungssystem**
Fragrance system
Système de parfum

(30) Priorität: 02.07.2009 DE 102009033020; 11.11.2009 DE 102009052530
(43) Veröffentlichungstag der Anmeldung: 05.01.2011
(73) Patentinhaber: Behr GmbH & Co. KG, 70469 Stuttgart (DE)
(72) Erfinder: Heilemann, Jürgen, 73240 Wendlingen (DE); Lochmahr, Karl, 71665 Vaihingen/Enz (DE); Magdalinski, Matthias, 74354 Besigheim (DE); Tidelski, Axel, 71063 Sindelfinden (DE); Rais, Thomas, 71672 Marbach/Neckar (DE); Paul, Michael, 74343 Sachsenheim (DE); Stiehler, Daniela, 70597 Stuttgart (DE); Stratmann, Lars, 70435 Stuttgart (DE); Treier, Joachim, 77728 Oppenlau (DE); Uhle, Matthias, 71384 Weinstadt (DE)
(74) Vertreter: Grauel, Andreas

(56) Entgegenhaltungen:
- EP-A1- 1 323 556
- WO-A1-2005/100063
- DE-U1-202004 010 015
- ES-A1- 2 263 354
- FR-A1- 2 868 017
- JP-A- 58 081 817

## Beschreibung

Die Erfindung betrifft ein Beduftungssystem gemäß dem Oberbegriff des Anspruches 1 und eine Kraftfahrzeugklimaanlage, wie sie in der DE 20 2004 010 015 U1 offenbart sind.

In Kraftfahrzeugen werden zur Komfortsteigerung der Insassen eines Fahrzeuginnenraumes in zunehmenden Maße Beduftungssysteme eingesetzt. Mittels des Beduftungssystems kann der Luft im Fahrzeuginnenraum ein Duftstoff mit einem bestimmten Aroma zugesetzt werden. Bei den

Die Duftstoffaufnahmeeinheit weist hierzu eine Einlassöffnung zum Einleiten der von der Luftfördereinrichtung geförderten Luft und eine Auslassöffnung zum Ausleiten der geförderten Luft aus der Duftstoffaufnahmeeinheit auf. Bei einem starken Erwärmen des Fahrzeuginnenraumes, beispielsweise bei einem Abstellen des Kraftfahrzeuges in der Sonne, erwärmt sich neben dem Fahrzeuginnenraum auch der Duftstoff im Duftbehältnis, so dass aufgrund des niedrigen Siedepunktes oder Dampfdruckes des flüssigen Duftstoffes unbeabsichtigt in größeren Mengen gasförmiger Duftstoff durch die Auslassöffnung in den Fahrzeuginnenraum gelangen kann. Bei einem Auswechseln der Duftstoffaufnahmeeinheit, um einen anderen Duftstoff in den Fahrzeuginnenraum einzuleiten oder um die Duftstoffaufnahmeeinheit mit einem neuen flüssigen Duftstoff nachzufüllen, kann es aufgrund der Öffnung an der Duftstoffaufnahmeeinheit zu einer Kontamination, beispielsweise der Hände, des Benutzers kommen. Ferner ist auch ein Verschütten des Duftstoffes aufgrund der nicht geschlossenen Öffnungen an der Duftstoffaufnahmeeinheit möglich.

Die DE 295 04 203 U1 zeigt ein Duftstoffdosiersystem zur kontinuierlichen dosierten Abgabe von flüssigem Duftstoff auf eine Verdunstungsoberfläche zur Verdunstung an die Umgebungsluft, bestehend aus einer Dosiervorrichtung und einem Vorratsraum, wobei der Vorratsraum mit einer Abgabeöffnung im Boden und einer dichtend verschließbaren Dosieröffnung im Deckel versehen ist. Dabei steht die Dosiervorrichtung im Wirkverbund mit der Dosieröffnung.

Die DE 10 2004 017 067 A1 zeigt eine Belüftungseinrichtung für ein Kraftfahrzeug mit einem Ventilator zur Förderung eines Luftstromes durch eine Luftauslassdüse in einen Fahrzeuginnenraum, wobei in dem Luftstrom ein vom Fahrzeuginnenraum zugänglicher Duftspender angeordnet ist, der eine Gebrauchs- und eine Nichtgebrauchsposition aufweist. Der Duftspender weist eine Einlassöffnung auf, in die in der Gebrauchsposition der Luftstrom zumindest teilweise einströmt und eine Auslassöffnung, aus der der Luftstrom nach Durchströmen einer Beduftungsstrecke zur Luftauslassdüse hin ausströmt. In nachteiliger Weise ist an der Auslassöffnung kein Absperrorgan angeordnet, so dass ein unbeabsichtigtes Einleiten von Duftstoffen in den Fahrzeuginnenraum möglich ist.

Die Aufgabe der vorliegenden Erfindung besteht deshalb darin, ein Beduftungssystem zur Verfügung zu stellen, bei dem kein unbeabsichtigter Duftaustrag in einen Fahrzeuginnenraum erfolgt und bei einem Wechsel einer Duftstoffaufnahmeeinheit keine Kontamination, beispielsweise der Hände, des Benutzers erfolgt. Das Beduftungssystem soll zuverlässig im Betrieb arbeiten.

Diese Aufgabe wird gelöst mit einem Beduftungssystem für ein Kraftfahrzeug nach Anspruch 1

Das Beduftungssystem weist ein erstes Absperrorgan zum Öffnen und Schließen der Auslassöffnung auf. Mittels des ersten Absperrorganes kann die Auslassöffnung unmittelbar geschlossen werden, indem das erste Absperrorgan an oder in der Auslassöffnung angeordnet ist oder das erste Absperrorgan kann die Auslassöffnung mittelbar abschließen, indem das erste Absperrorgan einen Duftkanal verschließt und dort angeordnet ist. Befindet sich das Beduftungssystem in einem abgeschalteten Modus oder in einer abgeschalteten Betriebsstellung, wird das erste Absperrorgan geschlossen, so dass ein unbeabsichtigtes Einleiten des Duftstoffes in den Innenraum des Kraftfahrzeuges in vorteilhafter Weise, beispielsweise bei einer starken Erwärmung des Kraftfahrzeuges, ausgeschlossen ist.

Die Duftstoffaufnahmeeinheit muss zum Nachfüllen des Duftstoffes oder zum Auswechseln des Duftstoffes in der Duftstoffaufnahmeeinheit aus dem übrigen Beduftungssystem herausgenommen werden. Die Duftstoffaufnahmeeinheit ist hierbei dahingehend mit wenigstens einem Absperrmittel versehen, dass bei einer herausgenommenen Duftstoffaufnahmeeinheit die Duftstoffaufnahmeeinheit fluiddicht, d. h. flüssigkeits- und gasdicht, abgeschlossen ist. Eine Kontamination der Hände des Benutzers beim Austauschen der Duftstoffaufnahmeeinheit oder ein unbeabsichtigtes Ausschütten des Duftstoffes aus der Duftstoffaufnahmeeinheit aus Öffnungen der Duftstoffaufnahmeeinheit ist damit ausgeschlossen. Das wenigstens eine Absperrmittel verschließt sämtliche Öffnungen der Duftstoffaufnahmeeinheit, so dass dieses fluiddicht abgeschlossen ist.

Insbesondere ist die Duftstoffaufnahmeeinheit fluiddicht abgeschlossen, indem die Einlassöffnung und die Auslassöffnung mittels des wenigstens einen Absperrmittels verschlossen sind. Das wenigstens eine Absperrmittel verschließt somit sämtliche Öffnungen der Duftstoffaufnahmeeinheit, so dass diese nach dem Herausnehmen fluiddicht abgeschlossen ist.

Das Beduftungssystem ist weiterhin mit einem zweiten Absperrorgan zum Schließen und Öffnen der Einlassöffnung versehen, dass bei einem geöffneten zweiten Absperrorgan Luft in die Duftstoffaufnahmeeinheit einleitbar ist und bei einem geschlossenen zweiten Absperrorgan keine Luft in die Duftstoffaufnahmeeinheit einleitbar ist. Das zweite Absperrorgan verschließt oder öffnet die Einlassöffnung mittelbar oder unmittelbar, so dass in einem abgeschalteten Betriebszustand des Beduftungssystems keine Luft in die Duftstoffaufnahmeeinheit eingeleitet werden kann, weil in einem abgeschalteten Betriebszustand des Beduftungssystems das zweite Absperrorgan geschlossen ist. Bei einem eingeschalteten Betriebszustand des Beduftungssystems ist das zweite Absperrorgan geöffnet, so dass mittels der Luftfördereinrichtung Luft in die Duftstoffaufnahmeeinheit eingeleitet werden kann.

In einer ergänzenden Ausführungsform weist das Beduftungssystem einen Duftkanal, z. B. einen Duftausbringschlauch, zum Leiten der Luft von der Duftstoffaufnahmeeinheit in den Fahrzeuginnenraum auf. Am Ende des Duftkanales befindet sich ein Duftaustritt des Beduftungssystems. Dadurch kann der Duftaustritt räumlich von der Duftstoffaufnahmeeinheit getrennt werden, indem der gasförmige Duftstoff von der Duftstoffaufnahmeeinheit durch den Duftkanal zu dem Duftaustritt geleitet wird.

Vorzugsweise ist das erste Absperrorgan in dem Duftkanal angeordnet.

In einer Variante mündet ein an einem Ende des Duftkanales oder an der Auslassöffnung ausgebildeter Duftaustritt des Beduftungssystems unmittelbar in den Fahrzeuginnenraum oder der Duftaustritt in einen Luftkanal oder ein Gehäuse einer Kraftfahrzeugklimaanlage mündet und/oder die Luftfördereinrichtung Gebläse einer Kraftfahrzeugklimaanlage ist oder eine separate Fördereinrichtung nur für das Beduftungssystem, z. B. ein Zusatzgebläse, eine Pumpe oder ein Kompressor, ist. Mündet der Duftaustritt in einen Luftkanal oder ein Gehäuse einer Kraftfahrzeugklimaanlage und/oder ist die Luftfördereinrichtung des Beduftungssystems ein Gebläse der Kraftfahrzeugklimaanlage, kann das Beduftungssystem auch Teil einer Kraftfahr-zeugklimaanlage sein, weil Komponenten der Kraftfahrzeugklimaanlagen auch für das Beduftungssystem genutzt werden. Bei einer Ausführung der Luftfördereinrichtung als separate Fördereinrichtung nur für das Beduftungssystem kann die Fördereinrichtung, beispielsweise ein Gebläse, in die Lagerungseinheit eingebaut sein oder unterhalb oder in die Armaturen-tafel eingebaut sein oder im Fahrzeuginnenraum, im Aggregateraum oder im Kofferraum positioniert sein. Die Fördereinrichtung umfasst vorzugsweise außerdem eine Körperschallentkoppelung und/oder eine Luftschallentkoppelung und/oder einen Filter, beispielsweise einen Staubfilter, insbesondere in der Luftansaugung.

Zweckmäßig weist das Beduftungssystem einen Luftzuführkanal, z. B. einen Luftzuführschlauch, zum Leiten der Luft von der Luftfördereinrichtung in die Duftstoffaufnahmeeinheit auf. Die Luft kann somit von der Luftfördereinrichtung durch den Luftzuführungskanal zu der Duftstoffaufnahmeeinheit geleitet werden, so dass die Duftstoffaufnahmeeinheit räumlich von der Luftfördereinrichtung getrennt werden kann. In der Duftstoffeinheit wird die geförderte Luft mit Duftstoff angereichert bzw. beduftet.

In einer weiteren Ausführungsform ist das zweite Absperrorgan in dem Luft-zuführkanal angeordnet.

Insbesondere ist das wenigstens eine Absperrmittel dahingehend ausgebildet, dass bei einem Herausnehmen der Duftstoffaufnahmeeinheit aus dem übrigen Beduftungssystem sich das wenigstens eine Absperrmittel selbsttä-tig oder automatisch schließt, so dass die Duftstoffaufnahmeeinheit selbsttätig oder automatisch fluiddicht abgeschlossen wird. Eine Kontamination der Hände des Benutzers beim Herausnehmen der Duftstoffaufnahmeeinheit aus dem Beduftungssystems ist somit ausgeschlossen, weil beim Herausnahmen oder kurz vor dem Herausnehmen mittels des wenigstens einen Absperrmittels sämtliche Öffnungen der Duftstoffaufnahmeeinheit geschlossen werden.

In einer ergänzenden Variante umfasst das Beduftungssystem eine Lagerungseinheit für die Duftstoffaufnahmeeinheit.

In einer weiteren Ausgestaltung ist das Beduftungssystem dahingehend ausgebildet, dass die Duftstoffaufnahmeeinheit, umfassend das Duftbehättnis und die Absperrmitteleinheit, nur aus dem übrigen Beduftungssystem oder der Lagerungseinheit herausnehmbar ist, sofern mittels des wenigstens einen Absperrmittels die Duftstoffaufnahmeeinheit fluiddicht abgeschlossen ist.

In einer weiteren Variante ist die Lagerungseinheit mit einem Mechanismus zum Bewegen der Duftstoffaufnahmeeinheit zwischen einer Nichtgebrauchstellung und einer Gebrauchsstellung und umgekehrt in der Lagerungseinheit ausgebildet und in der Nichtgebrauchsstellung der Duftstoffaufnahmeeinheit sind, dass das wenigstens eine Absperrmittel geschlossen und in einer Gebrauchsstellung sind das wenigstens eine Absperrmittel geöffnet.

In einer weiteren Ausgestaltung ist in der Nichtgebrauchsstellung die Duftstoffaufnahmeeinheit nicht aus der Lagerungseinheit herausnehmbar und in der Gebrauchsstellung ist die Duftstoffaufnahmeeinheit aus der Lagerungseinheit herausnehmbar.

Zweckmäßig behindert ein Hebel in der Nichtgebrauchsstellung das Herausnehmen der aus der Lagerungseinheit und in der Gebrauchsstellung befindet sich der Hebel in Stellung, so dass von dem Hebel das Herausnehmen der Duftstoffaufnahmeeinheit aus der Lagerungseinheit nicht behindert ist.

In eine weiteren Ausgestaltung sind mittels wenigstens einer Betätigungseinheit, insbesondere ein Anschlussrohr oder ein Stutzen, das wenigstens eine Absperrmittel mechanisch aufgrund der Relativbewegung der Duftstoffaufnahmeeinheit in der Lagerungseinheit betätigbar.

Insbesondere ist der Mechanismus manuell, z. B. mittels eines Hebels, von dem Benutzer betätigbar oder ist von einem Motor insbesondere Elektromotor, betätigbar.

In einer ergänzenden Variante ist die Duftstoffaufnahmeeinheit, insbesondere das Duftbehältnis, mit einem Datenträger versehen. In dem Datenträger sind Daten, beispielsweise die Art des Duftstoffes oder der Duftstoffe in dem Duftbehältnis und/oder die Menge des Duftstoffes oder der Duftstoffe, gespeichert. Der Datenträger ist dabei mittels eines Kontaktes oder kontaktlos auslesbar. Als Datenträger kommt z. B. eine SIM-Karte oder ein RFID-Chip oder ein Barcode in Betracht. Mittels einer Leseeinheit an der Duftstoffaufnahmeeinheit kann der Datenträger ausgelesen werden.

Vorzugsweise ist der Füllstand des Duftbehältnisses von eine Steuerungseinheit aufgrund der Betriebsdauer, d. h. der Förderzeit der Luftfördereinrichtung, oder berechenbar.

In einer weiteren Ausführungsform weist das Duftbehältnis einen Sensor zur Erfassung des Füllstandes des Duftstoffes in dem Duftbehältnis auf. Der Sensor ist beispielsweise eine optische Einrichtung oder weist einen von einem Schwimmer betätigten Schalter auf.

In einer Variante ist das erste Absperrorgan und/oder das zweite Absperrorgan und/oder das wenigstens eine Absperrmittel eine Klappe oder ein Rollband.

Eine erfindungsgemäße Kraftfahrzeugklimaanlage umfasst ein in dieser Schutzrechtsanmeldung beschriebenes Beduftungssystem, wobei insbesondere der Duftaustritt in den Luftkanal oder das Gehäuse der Kraftfahrzeugklimaanlage mündet und/oder die Luftfördereinrichtung des Beduftungssystems das Gebläse der Kraftfahrzeugklimaanlage ist.

In einer weiteren Ausgestaltung umfasst die Kraftfahrzeugklimaanlage ein Gebläse und/oder einen Verdampfer und/oder einen Kondensator und/oder einen Verdichter und/oder wenigstens einen Luftkanal und/oder wenigstens eine Luftleiteinrichtung, z. B. eine Luftklappe und/oder eine Heizeinrichtung, z. B. eine elektrische Heizeinrichtung und/oder einen Wärmeübertrager zum Erwärmen der durch die Kraftfahrzeugklimaanlage geleiteten Luft mittels Kühlmittel eines Verbrennungsmotors.

Im Nachfolgenden wird ein Ausführungsbeispiel der Erfindung unter Bezugnahme auf die beigefügten Zeichnungen näher beschrieben. Es zeigt:
- Fig. 1: einen schematisiertes Systembild eines Beduftungssystems,
- Fig. 2: eine Vorderansicht einer Duftaufnahmeeinheit in einer Lagerungseinheit in einer Nichtgebrauchsstellung der Duftaufnahmeeinheit,
- Fig. 3: eine Vorderansicht der Duftaufnahmeeinheit in der Lagerungseinheit in einer Gebrauchsstellung der Duftaufnahmeeinheit,
- Fig. 4: eine Teilrückansicht der Lagerungseinheit mit verschiedenen Stellungen eines Hebels,
- Fig. 5: einen Teilschnitt einer Absperrmitteleinheit mit zwei Ventilen und
- Fig. 6: einen Teilschnitt einer Absperrmitteleinheit mit einem zweikanaligen Ventilstössel.
- Fig. 7: Vorderansicht einer Lagerungseinheit mit Taste

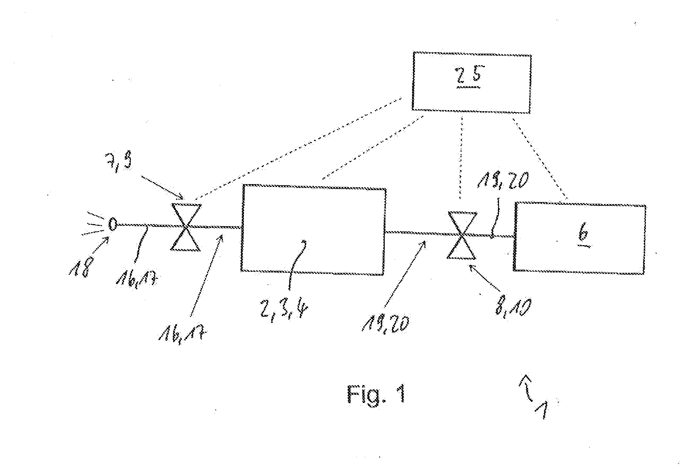

In Fig. 1 ist ein Systembild eines Beduftungssystems 1 für ein Kraftfahrzeug dargestellt. Das Beduftungssystem 1 dient zum Einbringen von Duftstoff aus einer Duftstoffaufnahmeeinheit 2 in einen Innenraum eines Kraftfahrzeuges (nicht dargestellt). Das Beduftungssystem kann dabei auch mehrere Duftstoffaufnahmeeinheiten 2 aufweisen, um gleichzeitig oder nacheinander verschiedene Duftstoffe in den Fahrzeuginnenraum einzuführen (nicht dargestellt). Bei einer Ausbildung des Beduftungssystems 1 mit mehreren Duftstoffaufnahmeeinheiten 2 sind entsprechende Wechselventile erforderlich, um die unterschiedlichen Duftstoffe in den Fahrzeuginnenraum gleichzeitig oder nacheinander einbringen zu können (nicht dargestellt).

Eine Luftfördereinrichtung 6 fördert Luft durch einen als Luftzuführschlauch 20 ausgebildeten Luftzuführkanal 19 zu der Duftstoffaufnahmeeinheit 2. Die Duftstoffaufnahmeeinheit 2 dient zur Aufnahme von flüssigem Duftstoff und weist hierzu ein Duftbehältnis 3 auf. Ferner umfasst die Duftstoffaufnahmeeinheit 2 auch eine Absperrmitteleinheit 4. Die durch den Luftzuführschlauch 20 in die Duftstoffaufnahmeeinheit 2 eingeleitete Luft, tritt durch einen als Duftausbringschlauch 17 ausgebildeten Duftkanal 16 aus der Duftstoffaufnahmeeinheit 2 wieder aus und tritt an einem Duftaustritt 18 aus dem Duftkanal 16 wieder aus. Der Duftaustritt 18 kann an einem Luftkanal oder an einer Belüftungsdüse einer Kraftfahrzeugklimaanlage angeordnet sein, so dass die aus dem Duftaustritt 18 austretenden Duftstoffe mittels der von der Kraftfahrzeugklimaanlage durch den Luftkanal oder die Luftdüse geleiteten Luft in den Fahrzeuginnenraum eingeleitet werden. Abweichend hiervon kann der Duftaustritt 18 auch unmittelbar am Fahrzeuginnenraum angeordnet sein, so dass durch eine separate spezielle Austrittsöffnung für den Duftstoff der Duftstoff in den Fahrzeuginnenraum eingeleitet wird (nicht dargestellt).

Die Duftstoffaufnahmeeinheit 2 ist beispielsweise im Handschuhfach eines Kraftfahrzeuges oder alternativ hierzu beispielsweise an einer Mittelkonsole oder unter der Armaturentafel am Fahrer- oder Beifahrersitz positioniert. In dem Luftzuführkanal 19 ist ein als zweites Ventil 10 ausgebildetes zweites Absperrorgan 8 angeordnet. Ferner ist in dem Duftkanal 16 ein als erstes Ventil 9 ausgebildetes erstes Absperrorgan 7 angeordnet. Eine Steuerungseinheit 25 steuert die Luftfördereinrichtung 6, das erstes Absperrorgan 7 und das zweite Absperrorgan 8. Bei einem eingeschalteten Beduftungssystem 1 bzw. in einem eingeschalteten Betriebsmodus des Beduftungssystems 1 ist die Luftfördereinrichtung 6 eingeschaltet und das erste Absperrorgan 7 und das zweite Absperrorgan 8 geöffnet. Dadurch kann von der Luftfördereinrichtung 6 Luft durch den Luftzuführkanal 19, die Duftstoffaufnahmeeinheit 2 und anschließend durch den Duftkanal 16 zu dem Duftaustritt 18 geleitet werden, wobei sich die von der Luftfördereinrichtung 6 geförderte Luft in der Duftstoffaufnahmeeinheit 2 mit gasförmigem Duftstoff anreichert. Die Duftstoffaufnahmeeinheit 2 weist eine in Fig. 1 nicht dargestellte Einlassöffnung 32 zum Einleiten der von der Luftfördereinrichtung 6 geförderten Luft auf, wobei der Luftzuführkanal 19 in die Einlassöffnung 32 mündet. In analoger Weise weist die Duftstoffaufnahmeeinheit 2 eine nicht in Fig. 1 dargestellte Auslassöffnung 33 auf, wobei die Auslassöffnung 33 zum Ausleiten der in die Duftstoffaufnahmeeinheit 2 eingeleiteten Luft dient und an den Duftkanal 16 angeschlossen ist. Bei einem abgeschalteten Beduftungssystem 1 bzw. in einem abgeschalteten Betriebsmodus des Beduftungssystems 1 werden von der Steuerungseinheit 25 die Luftfördereinrichtung 6 abgeschaltet und das erste Absperrorgan 7 und das zweite Absperrorgan 8 geschlossen. Dadurch können in vorteilhafter Weise aufgrund des geschlossenen ersten und zweiten Absperrorganes 7, 8 nicht unbeabsichtigte Duftstoffe aus dem Duftaustritt 18 in den Fahrzeuginnenraum gelangen. Die Luftfördereinrichtung 6 und die beiden Absperrorgane 7, 8 werden somit von der Steuerungseinheit 25 in Abhängigkeit von dem Betriebsmodus des Beduftungssystems 1 gesteuert.

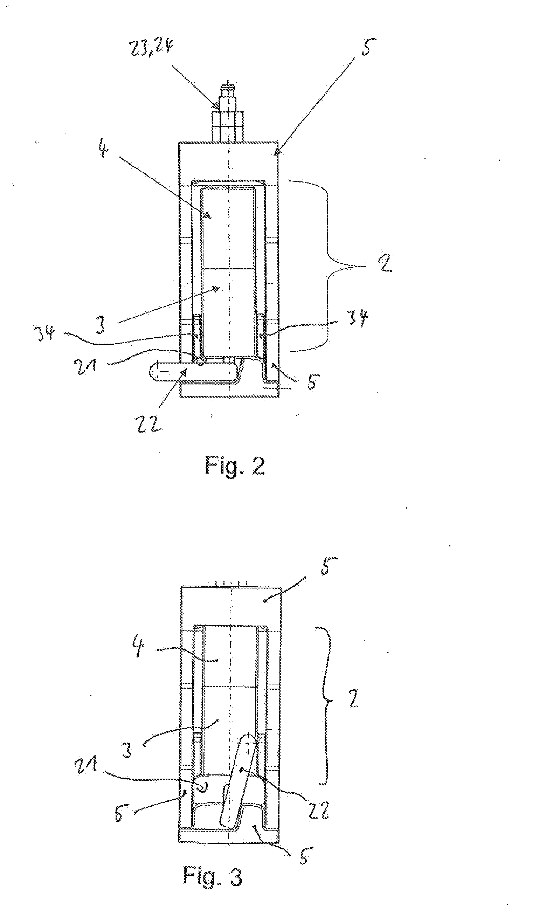

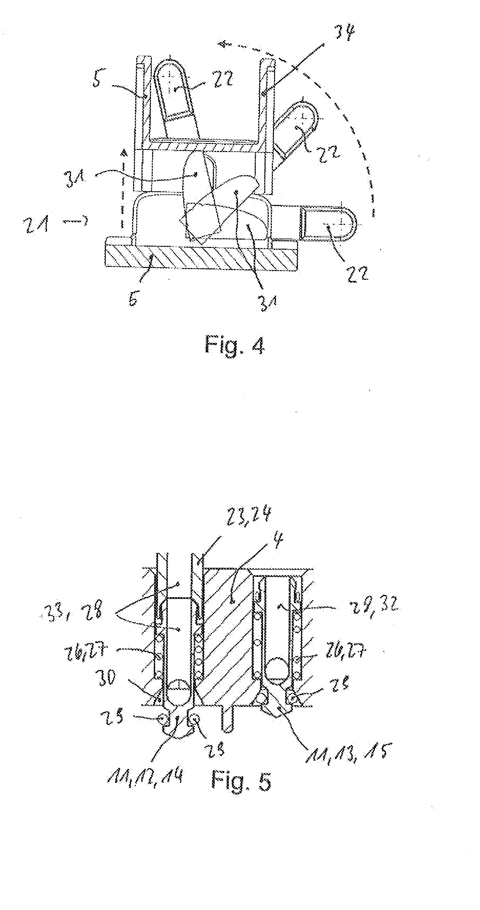

Die Duftstoffaufnahmeeinheit 2 umfasst das Duftbehältnis 3 und die Absperrmitteleinheit 4 (Fig. 2 und 3). Das Duftbehältnis 3 dient zur Aufnahme des flüssigen Duftstoffes und die Absperrmitteleinheit 4 ist mit Absperrmitteln 11 (Fig. 5) versehen. Das Duftbehältnis 3 weist an der Oberseite, d. h. an der Seite, an der das Duftbehältnis 3 mit der Absperrmitteleinheit 4 verbunden ist, eine nicht dargestellte große Öffnung auf. Mittels dieser Öffnung kann in das Duftbehältnis 3 flüssiger Duftstoff nachgefüllt werden oder dieser ausgetauscht werden. Ferner ist es möglich, aufgrund der Größe der Öffnung das Duftbehältnis 3 beispielsweise auch in einer Geschirrspülmaschine zu reinigen. Die Absperrmitteleinheit 4 ist mit dem Duftbehältnis 3 mittels einer Steck- und/oder Schnappverbindung verbunden, so dass auch bei größeren Drücken in dem Duftbehältnis 3 sich die Absperrmitteleinheit 4 nicht von dem Duftbehältnis 3 löst. Beispielsweise können in dem Duftbehältnis 3 Drücke im Bereich von ungefähr 1 bar auftreten. Die Absperrmitteleinheit 4 verschließt die nicht dargestellte große Öffnung des Duftbehältnisses 3.

Die Absperrmitteleinheit 4 ist in Fig. 5 in einem vertikalen Teilschnitt dargestellt, wobei der Schnitt gemäß Fig. 5 parallel zu einer Zeichenebene von Fig. 2 oder 3 verläuft. Die Absperrmitteleinheit 4 ist mit zwei Bohrungen 28 versehen. Eine Bohrung 28 dient dabei als Einlassöffnung 32 von Luft in das Duftbehältnis 3 und eine Bohrung 28 dient als Auslassöffnung 33 zum Ausleiten von Luft aus dem Duftbehältnis 3. Die beiden Bohrungen 28 enden dabei in der nicht dargestellten Öffnung des Duftbehältnisses 3, so dass durch die beiden Bohrungen 28 Luft in das Duftbehältnis 3 ein- und ausgeleitet werden kann. In den beiden Bohrungen 28 ist jeweils das Absperrmittel 11 angeordnet. Ein als erstes Absperrventil 14 ausgebildetes erstes Absperrmittel 12 dient zum Öffnen und Schließen der Auslassöffnung 33 und ein als zweites Absperrventil 15 ausgebildetes zweites Absperrventil 13 dient zum Öffnen und Schließen der Einlassöffnung 32. Die Bohrungen 28 weisen an dem Ende, das in der Öffnung des Duftbehältnisses 3 endet und in Fig. 5 unten dargestellt ist, eine konische Aufweitung 30 auf. Die beiden Absperrventile 14, 15 weisen eine Ringnut auf, in der ein Dichtring 29 angeordnet ist. Die Absperrventile 14, 15 sind dabei axial in den beiden Bohrungen 28 beweglich und eine als elastisches Element 26 ausgebildete Feder 27 bringt auf die beiden Absperrventile 14, 15 dahingehend eine Kraft auf, dass die Absperrventile 14, 15 die beiden Bohrungen 28 jeweils verschließen. In Fig. 5 ist das zweites Absperrventil 13 in einer geschlossen Stellung, d. h. der Dichtring 29 liegt an der konischen Aufweitung 30 der Bohrung 28 auf und der übrige Teil der Bohrung 28 im Bereich der konischen Aufweitung 30 ist von dem zweiten Absperrventil 13 verschlossen. In Fig. 5 ist das erste Absperrventil 14 in einer geöffneten Stellung. Mittels einer als Anschlussrohr 24 ausgebildeten Betätigungseinheit 23 wurde das erste Absperrventil 14 entgegen der Kraft der Feder 27 nach unten in die geöffnete Stellung bewegt.

Die Duftstoffaufnahmeeinheit 2 mit dem Duftbehältnis 3 und der Absperrmitteleinheit 4 ist in einer Lagerungseinheit 5 angeordnet (Fig. 2 bis 4). Am unteren Ende der Lagerungseinheit 5 ist ein Mechanismus 21 (Fig. 4) vorhanden. Der Mechanismus 21 umfasst einen Hebel 22 und einen Nocken 31. Mittels des Mechanismus 21 kann die Duftstoffaufnahmeeinheit 2 vertikal zwischen einer Gebrauchsstellung und einer Nichtgebrauchsstellung hin und her bewegt werden. In Fig. 2 ist die Nichtgebrauchsstellung dargestellt, in der sich die Duftstoffaufnahmeeinheit 2 relativ zu der Lagerungseinheit 5 weiter unten befindet und in Fig. 3 ist eine Gebrauchsstellung dargestellt, in der sich die Duftstoffaufnahmeeinheit 2 relativ zu der Lagerungseinheit 5 in einer weiter oben liegenden Position bzw. Stellung befindet. In der Nichtgebrauchsstellung befindet sich der Hebel 22 in einer Stellung, so dass durch den Hebel 22 das Herausnehmen der Duftstoffaufnahmeeinheit 2 aus der Lagerungseinheit 5 nicht behindert ist (Fig. 2). In der Gebrauchsstellung behindert der Hebel 22 das Herausnehmen der Duftstoffaufnahmeeinheit 2 aus der Lagerungseinheit 5, so dass die Duftstoffaufnahmeeinheit 2 nicht aus der Lagerungseinheit 5 herausgenommen werden kann.

Der Hebel 22 steht in Wirkverbindung mit einem Nocken 31. Bei einem Verschwenken des Hebels 22 von einer horizontalen Stellung, die in Fig. 2 dargestellt ist und ferner auch in Fig. 4, zu einer ungefähren vertikalen Ausrichtung, die in Fig. 3 und auch in Fig. 4 dargestellt ist, bewegt der Nocken 31 eine Aufzugeinheit 34 als Teil der Lagerungseinheit 5 vertikal nach oben. In der Aufzugeinheit 34 wird die Duftstoffaufnahmeeinheit 2 aufgelegt, die in Fig. 2 und 3 dargestellt ist. In Fig. 4 ist die Duftstoffaufnahmeeinheit 2 nicht dargestellt. Die Lagerungseinheit 5 weist zwei Anschlussrohre 24 auf, von denen in Fig. 2 nur eines und in Fig. 3 keines dargestellt sind. Befindet sich die Duftstoffaufnahmeeinheit 2 in der Lagerungseinheit 5 in der Nichtgebrauchsstellung gemäß Fig. 2, bringen die beiden Anschlussrohre 24 als Betätigungseinheit 23 für die beiden Absperrventile 14, 15 keine Kraft auf die Absperrventile 14, 15 auf, so dass sich beide Absperrventile 14, 15 in einer geschlossenen Stellung befinden. Wird somit die Duftstoffaufnahmeeinheit 2 aus der Lagerungseinheit 5 in der Nichtgebrauchsstellung gemäß Fig. 2 aus der Lagerungseinheit 5 herausgenommen, sind die Ein- und Auslassöffnungen 32, 33 der Duftstoffaufnahmeeinheit 2 von den beiden Absperrventilen 14, 15 verschlossen, so dass dadurch keine unbeabsichtigte Kontamination der Hände des Benutzers erfolgt. Nach dem Einsetzen der Duftstoffaufnahmeeinheit 2 in der Nichtgebrauchsstellung, d. h. einer Position der Aufzugeinheit 34 gemäß Fig. 2, wird anschließend der Hebel 22 in die Position gemäß Fig. 3 gebracht. Aufgrund der Wirkverbindung zwischen dem Hebel 22 und dem Nocken 31 bewegt sich die Aufzugeinheit 34 relativ gegenüber der übrigen Lagerungseinheit 5 nach oben, so dass dadurch auch die Duftstoffaufnahmeeinheit 2 sich nach oben bewegt. Beim nach oben Bewegen der Duftstoffaufnahmeeinheit 2 treten die beiden Anschlussrohre 24 mit dem ersten Absperrventil 14 und dem zweiten Absperrventil 15 in mechanischer Wirkverbindung, so dass aufgrund der Relativbewegung der Absperrmitteleinheit 4 nach oben die beiden Anschlussrohre 24 das zweite Absperrventil 15 und das erste Absperrventil 14 in eine geöffnete Stellung bringen. In der Gebrauchsstellung gemäß Fig. 3 sind somit die Einlassöffnung 32 und die Einlassöffnung 33 geöffnet. An die beiden Anschlussrohre 24 der Lagerungseinheit 5 sind der Luftzuführschlauch 20 und der Duftausbringschlauch 17 angeschlossen. Damit kann das Beduftungssystem 1 von der Steuerungseinheit 25 in einem ein- oder ausgeschalteten Betriebszustand betrieben werden gemäß obiger Beschreibung.

Im Nachfolgenden wird ein zweites, nicht in den Figuren dargestelltes Ausführungsbeispiel beschrieben. Dabei werden im Nachfolgenden nur die Unterschiede zu dem ersten Ausführungsbeispiel gemäß Fig. 1 bis 5 dargestellt. Die Aufzugeinheit 34 wird anstelle der manuellen Betätigung durch den Benutzer mittels des Hebels 22 von einem Aktuator oder Motor, insbesondere einem Elektromotor, zwischen der Gebrauchsstellung und der Nichtgebrauchsstellung bewegt. Das Beduftungssystem 1 weist ferner kein erstes Absperrorgan 7 in dem Duftkanal 16 und kein zweites Absperrorgan 8 in dem Luftzuführkanal 19 auf. Wird das Beduftungssystem 1 von der Steuerungseinheit 25 eingeschaltet, d. h. von einem ausgeschalteten Betriebszustand in einen eingeschalteten Betriebszustand versetzt, wird mittels des Motors die Aufzugeinheit 34 und damit auch die Duftstoffaufnahmeeinheit 2 von der tiefer liegenden Nichtgebrauchsstellung in die höher liegende Gebrauchsstellung bewegt. Ferner wird die Luftfördereinrichtung 6 eingeschaltet. Im eingeschalteten Zustand sind somit die Ein- und Auslassöffnungen 32, 33 aufgrund der Position de Duftstoffaufnahmeeinheit 2 in der Lagerungseinheit 5 geöffnet, so dass das erste Absperrmittel 12 und das zweite Absperrmittel 13 nicht nur als Absperrmittel 11 zum fluiddichten Verschließen des Duftbehältnisses 3 fungiert, sondern auch dazu, den Luftzuführkanal 19 und den Duftkanal 16 zu öffnen, d. h. auch als erstes und zweites Absperrorgan 7, 8.

Bei einem Ausschalten des Beduftungssystems 1 mittels der Steuerungseinheit 25, d. h. dem Versetzen des Beduftungssystems 1 von einem eingeschalteten Zustand in einen nicht eingeschalteten Betriebszustand, wird von dem Motor die Duftstoffaufnahmeeinheit 2 von der Gebrauchsstellung analog zu Fig. 3 in die Nichtgebrauchsstellung gemäß Fig. 2 bewegt. Im ausgeschalteten Betriebszustand des Beduftungssystems 1 sind damit aufgrund des automatischen Bewegens der Duftstoffaufnahmeeinheit 2 das erste Absperrventil 14 und das zweite Absperrventil 15 geschlossen. Ferner ist auch die Luftfördereinrichtung 6 abgeschaltet. Dadurch kann auch nicht unbeabsichtigt Duftstoff in den Fahrzeuginnenraum eindringen. Ferner ist es auch möglich, ohne einen Hebel 22 zu betätigen, die Duftstoffaufnahmeeinheit 2 aus der Lagerungseinheit 5 zu entnehmen.

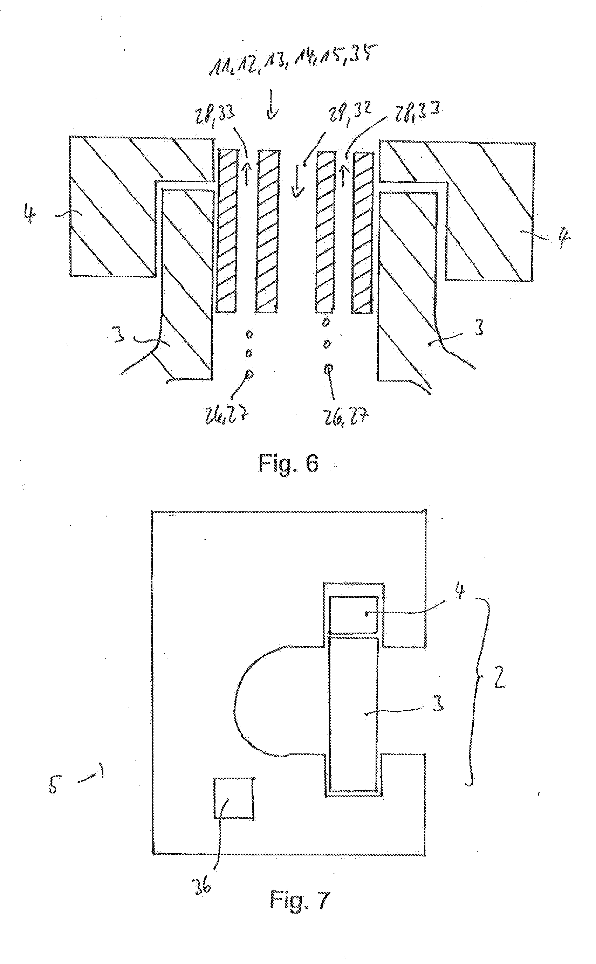

In Fig. 6 ist ein zweites Ausführungsbeispiel des Absperrmittels 11 dargestellt. Das Absperrmittel 11 weist einen zweikanaligen Ventilstössel 35 auf. Der Ventilstössel 35 weist eine Bohrung 28 als Einlassöffnung 32 und eine Bohrung 28 als Auslassöffnung 33 auf. Die Bohrung 28 der Auslassöffnung 33 ist dabei koaxial zu der Bohrung 28 der Einlassöffnung 32 ausgebildet. Damit sind in diesem zweiten Ausführungsbeispiel keine zwei separaten Absperrventil 13, 14 als getrennte Bauteile wie in dem ersten Ausführungsbeispiel des Absperrmittels 11 (Fig. 5) erforderlich. Das Absperrmittel 11 ist an der Absperrmitteleinheit 4 befestigt und die Funktionsweise entspricht dem ersten Ausführungsbeispiel. Die als elastisches Element 26 ausgebildete Feder 27 drückt den Ventilstössel 35 bzw. die beiden Absperrventile 14, 15 in eine geschlossene Stellung. Mittels eines nicht dargestellten Anschlussrohres 24 wird der Ventilstössel 35 in eine geöffnete Stellung gebracht. Der Dichtring 29 ist in Fig. 6 nicht dargestellt.

In Fig. 7 ist ein weiteres Ausführungsbeispiel der Lagerungseinheit 5 dargestellt. Die Lagerungseinheit 5 ist mit einer Taste 36 versehen. Die Taste 36 steht in mechanischer Wirkverbindung mit dem nicht dargestellten Mechanismus 21, der als Push/Push-Kinematik ein Federelement, ein Dämpfungselement, eine Herzkurve zur Zwischenrastung und einen Umlenkmechanismus zur Nockenbetätigung umfasst. Bei einem Betätigen oder Drücken der Taste 36 wird die Duftstoffaufnahmeeinheit 2 von der Gebrauchsstellung in die Nichtgebrauchsstellung, sofern sie sich in der Gebrauchsstellung befunden hat, bewegt oder von der Nichtgebrauchsstellung in die Gebrauchsstellung bewegt, sofern sie sich in der Nichtgebrauchsstellung befunden hat. Jedes Betätigen der Taste führt somit zu einer Bewegung der Duftstoffaufnahmeeinheit 2 und einer damit verbundenen Änderung der Stellung der Duftstoffaufnahmeeinheit 2 in der Lagerungseinheit 5. Die Stellung der Duftstoffaufnahmeeinheit 2 in der Lagerungseinheit 5 wird von einem Sensor (nicht dargestellt), beispielsweise einem Schalter, erfasst. Die Lagerungseinheit 5 weist außerdem die Luftfördereinrichtung 6 und die Steuerungseinheit 25 (nicht dargestellt) auf. Ferner weist die Lagerungseinheit 5 zwei Anschlussrohre 24 auf (nicht dargestellt). Die in die Lagerungseinheit 5 eingebaute und nicht dargestellte Steuerungseinheit 25 aktiviert die Luftfördereinrichtung 6 nur in einer Gebrauchsstellung der Duftstoffaufnahmeeinheit 2. In die Lagerungseinheit 5 ist außerdem eine Beleuchtungseinrichtung (nicht dargestellt) integriert, um die Duftstoffaufnahmeeinheit 2 zu beleuchten. Die Beleuchtungseinrichtung kann als Designfeature dienen oder dazu, dass auch bei Dunkelheit oder schlechter Beleuchtung die Duftstoffaufnahmeeinheit 2 sichtbar ist.

Insgesamt betrachtet sind mit dem erfindungsgemäßen Beduftungssystem 1 und dem erfindungsgemäßen Kraftfahrzeug erhebliche Vorteile verbunden. In einem ausgeschalteten Betriebszustand des Beduftungssystems 1 können nicht unbeabsichtigt Duftstoffe in den Fahrzeuginnenraum gelangen. Ferner ist eine Kontamination von Händen eines Benutzers beim Wechseln der Duftstoffaufnahmeeinheit 2 ausgeschlossen, weil das Beduftungssystem 1 dahingehend ausgebildet ist, dass die Duftstoffaufnahmeeinheit 2 fluiddicht abgeschlossen ist, wenn diese nicht in Wirkverbindung mit einer an der Lagerungseinheit 5 ausgebildeten Betätigungseinheit 23 steht. Damit ist sicher gewährleistet, dass eine aus dem übrigen Beduftungssystem 1 herausgenommene Duftstoffaufnahmeeinheit 2 ständig fluiddicht abgeschlossen ist.

### Bezugszeichenliste

1 Beduftungssystem
2 Duftstoffaufnahmeeinheit
3 Duftbehältnis
4 Absperrmitteleinheit
5 Lagerungseinheit
6 Luftfördereinrichtung
7 erstes Absperrorgan
8 zweites Absperrorgan
9 erstes Ventil
10 zweites Ventil
11 Absperrmittel
12 erstes Absperrmittel
13 zweites Absperrmittel
14 erstes Absperrventil
15 zweites Absperrventil
16 Duftkanal
17 Duftausbringschlauch
18 Duftaustritt
19 Luftzuführkanal
20 Luftzuführschlauch
21 Mechanismus
22 Hebel
23 Betätigungseinheit
24 Anschlussrohr
25 Steuerungseinheit
26 elastisches Element
27 Feder
28 Bohrung in Absperrmitteleinheit
29 Dichtring
30 konische Aufweitung
31 Nocke
32 Einlassöffnung
33 Auslassöffnung
34 Aufzugeinheit
35 Ventilstössel
36 Taste

## Patentansprüche

1. Beduftungssystem (1) für ein Kraftfahrzeug, umfassend
- ein Duftstoffaufnahmeeinheit (2), die ein Duftbehältnis (3) zur Aufnahme eines insbesondere flüssigen Duftstoffes und eine Absperrmitteleinheit (4) umfasst,
- eine Luftfördereinrichtung (6) zum Fördern von Luft durch die Duftstoffaufnahmeeinheit (2), um Duftstoff mittels der geförderten Luft in einen Fahrzeuginnenraum einzuleiten,
- wobei die Absperrmitteleinheit (4) eine Einlassöffnung (32) zum Einleiten der von der Luftfördereinrichtung (6) geförderten Luft in das Duftbehältnis (3) und eine Auslassöffnung (33) zum Ausleiten der geförderten Luft aus dem Duftbehältnis (3) aufweist, sowie
ein als erstes Absperrventil (14) ausgebildetes erstes Absperrmittel (12) zum Schließen und Öffnen der Auslassöffnung (33), so dass bei einem geöffneten ersten Absperrmittel (12) Duftstoff in den Fahrzeuginnenraum einleitbar ist und bei einem geschlossenen ersten Absperrmittel (12) kein Duftstoff in den Fahrzeuginnenraum einleitbar ist,
und wobei die Absperrmitteleinheit (4) dahingehend ausgebildet ist, dass bei einer aus dem übrigen Beduftungssystem (1) herausgenommenen Duftstoffaufnahmeeinheit (2) die Duftstoffaufnahmeeinheit (2) fluiddicht abgeschlossen ist,
**dadurch gekennzeichnet, dass**
die Absperrmitteleinheit (4) ein als zweites Absperrventil (15) ausgebildetes zweites Absperrmittel (13) zum Schließen und Öffnen der Einlassöffnung (32) aufweist, so dass bei einem geöffneten zweiten Absperrmittel (13) Luft in die Duftstoffaufnahmeeinheit (2) einleitbar ist und bei einem geschlossenen zweiten Absperrmittel (13) keine Luft in die Duftstoffaufnahmeeinheit (2) einleitbar ist und mit zwei Bohrungen (28) versehen ist, von denen eine als Einlassöffnung (32) und eine (28) als Auslassöffnung (33) dient, so dass durch die beiden Bohrungen (28) Luft in das Duftbehältnis (3) ein- und ausgeleitet werden kann, und in denen jeweils eines der beiden Absperrmittel (12, 13) angeordnet ist.

2. Beduftungssystem nach Anspruch 1, **dadurch gekennzeichnet, dass** das Beduftungssystem (2) einen Duftkanal (16), z. B. einen Duftausbringschlauch (17), zum Leiten der Luft von der Duftstoffaufnahmeeinheit (2) in den Fahrzeuginnenraum aufweist.

3. Beduftungssystem nach Anspruch 2, **dadurch gekennzeichnet, dass** ein erstes Absperrorgan (7) in dem Duftkanal (16) angeordnet ist.

4. Beduftungssystem nach einem der vorhergehenden Ansprüche, **dadurch gekennzeichnet, dass** ein an einem Ende des Duftkanals (16) oder an der Auslassöffnung (33) ausgebildeter Duftaustritt (18) des Beduftungssystems (2) unmittelbar in den Fahrzeuginnenraum oder in einen Luftkanal oder ein Gehäuse einer Kraftfahrzeugklimaanlage mündet.

5. Beduftungssystem nach einem der vorhergehenden Ansprüche, **dadurch gekennzeichnet, dass** die Luftfördereinrichtung (6) ein Gebläse einer Kraftfahrzeugklimaanlage oder eine separate Fördereinrichtung, z. B. ein Zusatzgebläse, eine Pumpe oder ein Kompressor, nur für das Beduftungssystem (1) ist.

6. Beduftungssystem nach einem der vorhergehenden Ansprüche, **dadurch gekennzeichnet, dass** das Beduftungssystem (1) einen Luftzuführkanal (19), z. B. einen Luftzuführschlauch (20), zum Leiten der Luft von der Luftfördereinrichtung (6) in die Duftstoffaufnahmeeinheit (2) aufweist.

7. Beduftungssystem nach Anspruch 6, **dadurch gekennzeichnet, dass** ein zweites Absperrorgan (8) in dem Luftzuführkanal (19) angeordnet ist.

8. Beduftungssystem nach einem der vorhergehenden Ansprüche, **dadurch gekennzeichnet, dass** die Absperrmittel (12, 13) dahingehend ausgebildet sind, dass bei einem Herausnehmen der Duftstoffaufnahmeeinheit (2) aus dem übrigen Beduftungssystem (1) sich die Absperrmittel (12, 13) selbsttätig oder automatisch schließen, so dass die Duftstoffaufnahmeeinheit (2) selbsttätig oder automatisch fluiddicht abgeschlossen wird.

9. Beduftungssystem nach einem der vorhergehenden Ansprüche, **dadurch gekennzeichnet, dass** das Beduftungssystem (1) eine Lagerungseinheit (5) für die Duftstoffaufnahmeeinheit (2) umfasst.

10. Beduftungssystem nach Anspruch 9, **dadurch gekennzeichnet, dass** die Lagerungseinheit (5) mit einem Mechanismus (21) zum Bewegen der Duftstoffaufnahmeeinheit (2) zwischen einer Nichtgebrauchsstellung und einer Gebrauchsstellung und umgekehrt in der Lagerungseinheit (5) ausgebildet ist, und in der Nichtgebrauchsstellung der Duftstoffaufnahmeeinheit (2) die Absperrmittel (12, 13) geschlossen sind und in einer Gebrauchsstellung die Absperrmittel (12, 13) geöffnet sind.

11. Beduftungssystem nach Anspruch 10, **dadurch gekennzeichnet, dass** mittels wenigsten einer Betätigungseinheit (23), insbesondere ein Anschlussrohr (24) oder ein Stutzen, ein Absperrmittel (12, 13) mechanisch aufgrund der Relativbewegung der Duftstoffaufnahmeeinheit (2) in der Lagerungseinheit (5) betätigbar ist.

12. Beduftungssystem nach Anspruch 10 oder 11, **dadurch gekennzeichnet, dass** der Mechanismus (21) manuell, z. B. mittels eines Hebels (22), von einem Benutzer oder von einem Motor, insbesondere Elektromotor, betätigbar ist.

13. Kraftfahrzeugklimaanlage, **dadurch gekennzeichnet, dass** die Kraftfahrzeugklimaanlage ein Beduftungssystem (2) gemäß einem der vorhergehenden Ansprüche umfasst, wobei insbesondere der Duftaustritt (18) in den Luftkanal oder das Gehäuse der Kraftfahrzeugklimaanlage mündet und/oder die Luftfördereinrichtung (6) des Beduftungssystems (1) das Gebläse der Kraftfahrzeugklimaanlage ist.

## Claims

1. A fragrancing system (1) for a motor vehicle, comprising
- a fragrance-receiving unit (2), which comprises a scent container (3) for receiving a fragrance, which in particular is liquid, and also comprises a shut-off means unit (4),
- an air-conveying device (6) for conveying air through the fragrance-receiving unit (2) so as to introduce fragrance into a vehicle interior by means of the convoyed air,
- wherein the shut-off means unit (4) has an inlet opening (32) for introducing the air convoyed by the air-conveying device (6) into the scent container (3) and an outlet opening (33) for discharging the convoyed air from the scent container (3), and
a first shut-off means (12), formed as a first shut-off value (14), for closing and opening the outlet opening (33), such that fragrance can be introduced into the vehicle interior when the first shut-off means (12) is open and no fragrance can be introduced into the vehicle interior when the first shut-off means (12) is closed,
and wherein the shut-off means unit (4) is configured such that, when a fragrance-receiving unit (2) is removed from the rest of the fragrancing system (1), the fragrance-receiving unit (2) is hermetically scaled,
**characterised in that**
the shut-off means unit (4) has a second shut-off means (13), formed as a second shut-off value (15), for closing and opening the inlet opening (32), such that air can be introduced into the fragrance-receiving unit (2) when the second shut-off means (13) is open and no air can be introduced into the fragrance-receiving unit (2) when the second shut-off means (13) is closed, and is provided with two bores (28), of which one serves as an inlet opening (32) and one (28) serves as an outlet opening (33), such that air can be introduced into and discharged from the scent container (3) through the two bores (28), and the two shut-off means (12, 13) are arranged one in each of said bores.

2. The fragrancing system according to claim 1, **characterised in that** the fragrancing system (2) has a scent channel (16), for example a scent extraction tube (17), for conducting the air from the fragrance-receiving unit (2) into the vehicle inferior.

3. The fragrancing system according to claim 2, **characterised in that** a first shut-off element (7) is arranged in the scent channel (16).

4. The fragrancing system according to one of the preceding claims, characterised if that a scent discharge (18) of the fragrancing system (2), said scent discharge being formed at one end of the scent channel (16) or at the outlet opening (33), leads directly into the vehicle inferior or into an air channel or a housing of a vehicle air-conditioning system.

5. The fragrancing system according to one of the preceding claims, **characterised in that** the air-convoying device (6) is a fan of a vehicle air-conditioning system or a separate conveying device, for example an auxiliary fan, a pump or a compressor, only, for the fragrancing system (1).

6. The fragrarcing system according to one of the preceding claims, **characterised in that** the fragrancing system (1) has an air feed channel (19), for example an air feed tube (20), for conducting the air from the air-conveying devise (6) into the fragrance-receiving unit (2).

7. The fragrancing system according two claim 6, **characterised in that** a second shut-off element (8) is arranged in the air feed channel (19).

8. The fragrancing system according to one of the receding claims, **characterised in that** the shut-off means (12, 13) are configured such that, when the fragrance-receiving unit (2) is removed from the rest of the fragrancing system (1), the shut-off means (12, 13) close autonomously or automatically, such that the fragrance-receiving unit (2) is hermetically sealed autonomously or automatically.

9. The fragrancing system according to one of the preceding claims, **characterised in that** the fragrancing system (1) comprises a mounting unit (5) for the fragrance-receiving unit (2).

10. The fragrancing system according to claim 9, **characterised in that** the mounting unit (5) is formed with a mechanism (21) for moving the fragrance-receiving unit (2) between a non-use position and a use position, and vice versa, in the mounting unit (5), and the shut-off means (12, 13) are closed in the non-use position of the fragrance-receiving unit (2) and the shut-off means (12, 13) are open in the use position.

11. The fragrancing system according to claim 10, **characterised in that**, by means of at least one actuation unit (23), in particular a connection pipe (24) or a connection piece, a shut-off means (12, 13) can be mechanically actuated on account of the relative movement of the fragrance-receiving unit (2) in the mounting unit (5).

12. The fragrancing system according to claim 10 or 11, **characterised in that** the mechanism (21) can be manually actuated, for example by means of a lever (22), by a user or by a motor, in particular an electric motor.

13. A vehicle air-conditioning system, **characterised in that** the vehicle air-conditioning system comprises a fragrancing system (2) according to one of the preceding claims, wherein in particular the scent discharge (18) leads into the air channel or the housing of the vehicle air-conditioning system and/or the air-conveying device (6) of the fragrancing system (1) is the fan of the vehicle air-conditioning system.

## Revendications

1. Système de diffusion de parfum (1) pour un véhicule automobile, comprenant
- un ensemble récepteur de substance parfumée (2) qui comprend un réservoir de parfum (3) servant à recevoir une substance parfumée, en particulier liquide, et qui comprend un ensemble (4) fermant des moyens d'arrêt,
- un dispositif de transport d'air (6) servant à transporter de l'air à travers l'ensemble récepteur de substance parfumés (2), pour introduire une substance parfumée dans l'habitacle d'un véhicule automobile, au moyen de l'air transporté,
où l'ensemble (4) formant des moyens d'arrêt présente une couverture d'entrée (32) servant à faire entrer, dans le réservoir de parfum (3), l'air transporté par le dispositif de transport d'air (6), et une couverture de sortie (33) servant à évacuer du réservoir de parfum (3), l'air transporté,
ainsi qu'un premier moyen d'arrêt (12) conçu comme une première soupape d'arrêt (14) servant à la fermeture et à l'ouverture de l'ouverture de sortie (33), de sorte que, quand un premier moyen d'arrêt (12) est ouvert, une substance parfumée peut être introduite dans l'habitacle du véhicule automobile et, quand un premier moyen d'arrêt (12) est fermé, aucune substance parfumée ne peut être introduite dans l'habitacle du véhicule automobile,
et où l'ensemble (4) formant des moyens d'arrêt est conçu en ce sens que, dans le cas d'un ensemble récepteur de substance parfumée (2) enlevé de la partie restante du système de diffusion de parfum (1), l'ensemble récepteur de substance parfumée (2) est fermé de façon étanche au fluide,
**caractérisé en ce que**
l'ensemble (4) formant des moyens d'arrêt présente un deuxième moyen d'arrêt (13) conçu commue une deuxième soupape d'arrêt (15) servant à la fermeture est à l'ouverture de l'ouverture d'entrée (32), de sorte que, quand un deuxième moyen d'arrêt (13) est couvert, de l'air peut être introduit dans l'ensemble récepteur de substance parfumée (2) et, quand un deuxième moyen d'arrêt (13) est fermé, aucune quantité d'air ne pleut être introduite dans l'ensemble récepteur de substance parfumée (2), ledit ensemble formant des moyens d'arrêt étant doté de deux perçages (28) dont l'un des perçages sert d'ouverture d'entrée (32), l'autre perçage (28) servant d'ouverture de sortie (33), de sorte que de l'air passant par les deux perçages (28) peut être introduit dans le réservoir de parfum (3) et en être évacué, perçages dans lesquels est disposé respectivement l'un des deux moyens d'arrêt (12, 13).

2. système de diffusion de parfum selon la revendication 1, **caractérisé en ce que** le système de diffusion de parfum (2) présente un conduit de parfum (16) par exemple un flexible de diffusion de parfum (17), servant à diriger dans l'habitacle du véhicule automobile l'air provenant de l'ensemble récepteur de substance parfumée (2).

3. Système de diffusion de parfum selon la revendication. 2, **caractérisé en ce qu'**un premier organe d'arrêt (7) est disposé dans le conduit de parfum (16).

4. Système de diffusion de parfum selon l'une quelconque des revendication précédentes, **caractérisé en ce qu'**une sortie de parfum (18) du système de diffusion de parfum (2), configurée au niveau d'une extrémité du conduit de parfum (16) ou au biveau de l'ouverture de sortie (33), débouche directement dans l'habitacle du véhicule automobile ou bien dans un conduit d'air ou dans un carter d'un système de climatisation du véhicule automobile.

5. Système de diffusion de parfum selon l'une quelconque des revendications précédentes, **caractérisé en ce que** le dispositif de transport d'air (6) est un pulseur d'un système de climatisation du véhicule automobile ou bien un dispositif de transport séparé, par exemple un pulseur supplémentaire, une pompe ou un compresseur, prévu seulement pour le système de diffusion de parfum (1).

6. Système de diffusion de parfum selon l'une quelconque des revendications précédentes, **caractérisé en ce que** le système de diffusion de parfum (1) présente un conduit d'alimentation d'air (19), par exemple un flexible d'alimentation d'air (20), servant à diriger dans l'ensemble récepteur de substance parfumée (2), l'air provenant du dispositif de transport d'air (6).

7. Système de diffusion de parfum selon la revendication 6, **caractérisé en ce qu'**un deuxième organe d'arrêt (8) est disposé dans le conduit d'alimentation d'air (19).

8. Système de diffusion de parfum selon l'une quelconque des revendications précédentes, **caractérisé en ce que** les moyens d'arrêt (12, 13) sont conçus en ce sens que, quand l'ensemble récepteur de substance parfumée (2) est enlevé de la partie restante du système de diffusion de parfum (1), les moyens d'arrêt (12, 13) se ferment de façon autonome ou automatique, de sorte que l'ensemble récepteur de substance parfumée (2) est fermé de façon autonome ou automatique, en étant étanche au fluide.

9. Système de diffusion de parfum selon l'une quelconque des revendications précédentes, **caractérisé en ce que** le système de diffusion de parfum (1) comprend un ensemble de stockage (5) prévu pour l'ensemble récepteur de substance parfumée (2).

10. Système de diffusion de parfum selon la revendication 9, **caractérisé en ce que** l'ensemble de stockage (5) est conçu en comportant un mécanisme (21) servant à déplacer l'ensemble récepteur de substance parfumée (2) passant, dans l'ensemble de stockage (5), d'une position de non utilisation à une position d'utilisation et inversement, et, dans la position de non utilisation de l'ensemble récepteur de substance parfumée (2), les moyens d'arrêt (12, 13') sont fermés et, dans une position d'utilisation, les moyens d'arrêt (12, 13) sont ouverts.

11. Système de diffusion de parfum selon la revendication. 10, **caractérisé en ce qu'**un moyen d'arrêt (12, 13) peut être actionné mécaniquement, dans l'ensemble de stockage (5), en raison du mouvement relatif de l'ensemble récepteur de substance parfumée (2), ledit actionnement se produisant au moyen au moins d'un ensemble d'actionnement (23), en particulier un tube de raccordement (24) ou une tubulure.

12. Système de diffusion de parfum selon la revendication 10 ou 11, **caractérisé en ce que** le mécanisme (21) peut être actionné manuellement, par exemple au moyen d'un levier (22), par un utilisateur ou bien par un moteur, en particulier un moteur électrique.

13. Système de climatisation d'un véhicule automobile, **caractérisé en ce que** le système de climatisation d'un véhicule automobile comprend un système de diffusion de parfum (2) selon l'une quelconque des revendications précédentes, où en particulier la sortie de parfum (18) débouche dans le conduit d'air ou dans le carter du système de climatisation du véhicule automobile et/ou le dispositif de transport d'air (6) du système de diffusion de parfum (1) est le pulseur du système de climatisation du véhicule automobile.
